(19) Europäisches Patentamt
European Patent Office
Office européen des brevets

(11) EP 0 539 178 B1

(12) **EUROPEAN PATENT SPECIFICATION**

(45) Date of publication and mention of the grant of the patent:
**14.01.1998 Bulletin 1998/03**

(51) Int Cl.[6]: **C09B 31/08**, C09B 31/18, C09D 11/00

(21) Application number: **92309602.8**

(22) Date of filing: **21.10.1992**

(54) **Waterfast Dye and Aqueous Ink**

Wasserbeständiger Farbstoff und wässrige Tinte

Colorant résistant à l'eau et encre aqueuse

(84) Designated Contracting States:
**CH DE FR GB LI**

(30) Priority: **25.10.1991 US 782684**

(43) Date of publication of application:
**28.04.1993 Bulletin 1993/17**

(73) Proprietor: **LEXMARK INTERNATIONAL, INC.**
**Greenwich, Connecticut 06836 (US)**

(72) Inventors:
- **Aulick, Rodney O.**
  **Lexington, Kentucky 40502 (US)**
- **Beach, Bradley L.**
  **Lexington, Kentucky 40505 (US)**
- **Elbert, Donald L.**
  **Lexington, Kentucky 40502 (US)**
- **Franey, Terence E.**
  **Lexington, Kentucky 40515 (US)**
- **Feeman, James F.**
  **Wyomissing, Pennsylvania 19610 (US)**
- **Olson, John M.**
  **Boulder, Colorado 80303 (US)**
- **Sanders, Allen C.**
  **Winchester, Kentucky 40391 (US)**
- **Vollmer, Robert L.**
  **Boulder, Colorado (US)**

(74) Representative: **Skailes, Humphrey John et al**
**Frank B. Dehn & Co.,**
**European Patent Attorneys,**
**179 Queen Victoria Street**
**London EC4V 4EL (GB)**

(56) References cited:

| | |
|---|---|
| **EP-A- 0 490 195** | **EP-A- 0 495 520** |
| **CH-A- 614 458** | **DE-A- 3 619 573** |
| **FR-A- 2 309 604** | **GB-A- 2 046 289** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 539 178 B1

Printed by Jouve, 75001 PARIS (FR)

## Description

### Technical Field

This invention relates to dyes for use in aqueous, waterfast inks and to aqueous inks containing such dyes. Such inks may be printed or otherwise applied in any manner, but typically are applied by drop on demand printing.

### Background Of The Invention

The dye molecule of this invention when applied to ordinary paper is highly waterfast against ordinary water and highly color-stable on basic paper. Since the dye is soluble in water having basic pH, an aqueous ink is achieved by formulas combining the dye and ammonia, as conventional for base-soluble dyes.

A number of dyes having similar, but not the same, structural formulas, are known and are found in the following list of references. However, no dye is known which provides the same excellent waterfastness and color fidelity as the dye of this invention when printed as a single ingredient on ordinary paper. The mechanism is not understood since similar molecules lack color fidelity significantly when applied to acid papers. The references are the following: U.S. Patents 4,963,189; 4,841,037; 4,626,284; 4,594,410; 4,143,035; 4,083,840; 2,265,425; 2,227,546; 2,112,920; 1,913,382; 1,365,040 and 2,193,729; EP-A 356,080, EP-A-89308157.0; DE 723,224; GB 418,454; Japanese patents/applications 1-313,568; 64-79,277; 60-243,176; 60-243,157; and CH 614,458.

Rendering a base-soluble material soluble by including ammonium hydroxide in an aqueous ink is a conventional technique. Illustrative teachings are US-A 3,891,581; Example XIII of US-A 5,017,644; and the foregoing US-A 4,963,189 and EP-A 356,080 (these two references have much identical content).

EP-A-0490195, which is relevant under Article 54(3) EPC, describes trisazo dyes having an aniline end group which is unsubstituted at the O-position: GB-A-2046289 describes trisazo dyes having three or four sulphonic acid substituents.

### Disclosure of the Invention

This invention is a dye of the following structural formula which provides waterfast inks when dissolved in solvents comprising an aqueous or equivalent polar solvent mixture (e.g. water and alcohol mixture) and ammonia.

Dye structural formula:

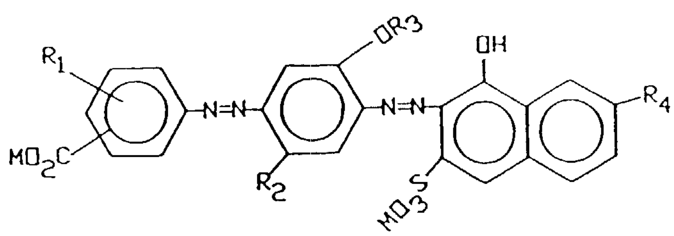

wherein

$R_1$ is -H, $-CO_2M$, $-CH_3$, $-OR_3$, or Cl;
$R_2$ is $C_{1-4}$ alkyl, $C_{1-4}$ alkoxy or $-CH_2CO_2M$;
$R_3$ is $C_{1-4}$ alkyl;
$R_4$ is $-NH_2$, $-NHR_3$, $-NHCH_2CO_2H$, or

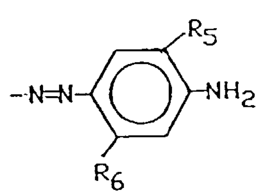

where

$R_5$ is $C_{2-4}$ alkyl or $-CO_2M$ and $R_6$ is -H or $-NH_2$;
M is H, $NH_4$; Na, K or Li,

and wherein the total number of $-CO_2M$ groups is 1 to 3.

These dyes in the form of inks for drop-on-demand jet printing exhibit all the necessary properties for producing waterfast printed characters by the mechanism described in this disclosure: 1) they become water insoluble below pH 6.0; 2) they produce intense black characters at only 2% dye concentration in the ink; 3) they are stable in aqueous ink formulations; and, 4) they do not clog the small orifices during non-use, thus providing good printhead maintenance when used for drop on demand printing.

Moreover, these dyes have the added property of remaining black when printed on acid paper. Many black dyes turn brown on acid papers.

**Best Mode For Carrying Out The Invention**

The preferred dye of this invention has the structural formula:

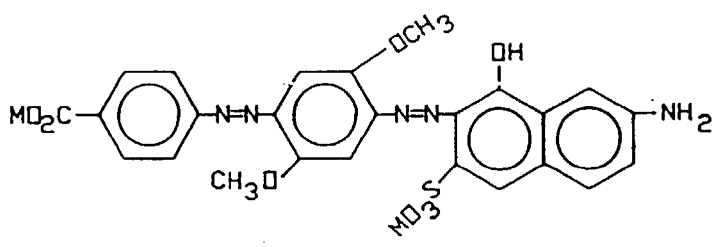

Wherein M is -H, $-NH_4$, -Li, -Na, -K

The preferred ink formula is as follows:

| Ingredient | Weight in Grams |
|---|---|
| Foregoing Dye (acid form) | 2 |
| 2-Pyrrolidone | 5 |
| Sodium Phosphate | 0.1 |
| Water & 2N Ammonium Hydroxide to Bring pH to 8.6 | 92.9 |
| Total | 100.0 |

The ingredients readily dissolve with stirring: The pyrrolidone is a standard humectant or cosolvent to maintain the solubility of the dye. The sodium phosphate tends to prevent clogging of printhead nozzles during periods of inactivity.

The foregoing dye was selected because of its excellent maintenance (no clogging of ink jet nozzle during shutdown) coupled with excellent waterfastness and excellent color density.

Waterfastness of printings from the preferred ink is 97% to ordinary water which is pH neutral, or to acidic water. Waterfastness is measured by controlled soaking in water of paper printed with the ink. The percent waterfastness is the percent of optical density retained after a five minute soak in deionized water, observed, for example, by an optical densitometer.

Alternative Dyes and Their Fabrication

**Example 1**

The dye having the formula:

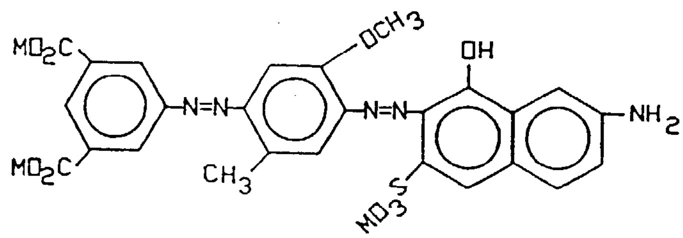

**Step 1**

5-Amino-isophthalic acid (9.64g, 0.05mole) was stirred in water (80ml) and the pH adjusted to 9.0 with 2N NaOH. 2N $NaNO_2$ solution (26.8ml) was added with continued stirring. The solution (pH > 9.0) was slowly added to a mixture of water (50ml) and 38% HCl (27ml). The mixture was maintained at 40-50°C and stirred for 30 minutes. Excess nitrous acid was removed by adding a saturated solution of sulfamic acid.

Cresidine (6.39g, 0.05mole) was dissolved in 25ml of water and 38% HCl (5ml). Solution was cooled to < 5°C with ice. The cold (< 10°C) diazo solution was added to the cresidine solution and the pH raised to 2.8 with 2N NaOH, with good stirring. The pH was maintained at 3.3 - 3.5 with sodium acetate solution. The temperature was maintained at < 10°C and the mixture stirred for 20 hours. The coupling mixture then was made alkaline with 2N NaOH to pH 8.0, producing an orange colored solution.

**Step 2**

2N $NaNO_2$ (31ml) was added to the solution from Step 1 and the temperature was adjusted to less than 10°C by adding ice. 38% HCl (31ml) was added rapidly with stirring and the temperature maintained at < 5°C. The solution was stirred overnight. Excess nitrous acid was removed by adding a saturated solution of sulfamic acid. Gamma acid (13.54g, 0.05mole) was placed in 80ml of water and the pH was adjusted to 9.0 by adding 20g of $Na_2CO_3$ and 37ml of 2N NaOH. The diazo was added to the gamma acid solution and a 20% $Na_2CO_3$ solution was added simultaneously to maintain the pH at > 9. Ice was added to maintain the temperature at 5°C. Coupling was rapid to precipitate black dye in the form of its Na salt. Acidification gave precipitate in the free acid form, which was filtered and washed with dilute aqueous acid. This product was formulated as an ink, and used in a drop-on-demand printer as described in Example 6, giving excellent results.

**EXAMPLE 2**

The dye having the formula:

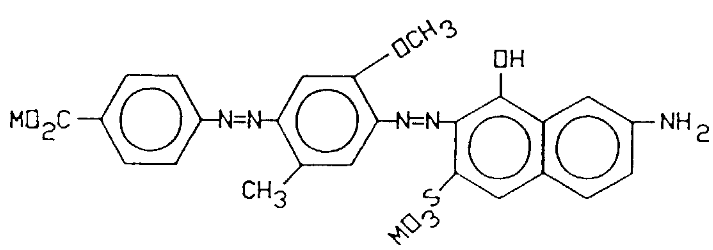

p-Aminobenzoic acid (6.92g., 0.05mole) was diazotized conventionally and coupled with an equivalent amount of cresidine as in Example 1. The amino group of the mono-azo intermediate thus formed was diazotized, also as in Example 1, and coupled similarly at pH 9 with an equivalent amount of gamma acid to produce the black dye as the sodium salt. This was converted to the free acid form by acidification, filtration and washing with dilute aqueous acid. The resultant dye was formulated as in ink and gave excellent results when tested as described in Example 6.

**EXAMPLE 3**

The dye of structural formula:

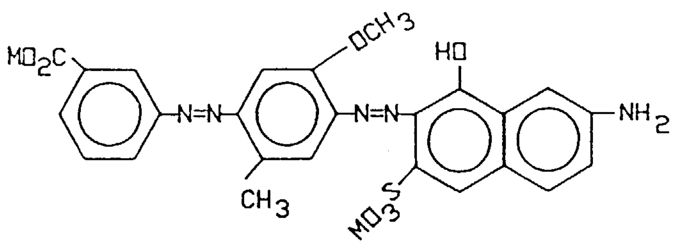

m-Aminobenzoic acid (6.92g, 0.05mole) was diazotised conventionally and coupled to cresidine. The 1-diazo-2-methoxy-5-methyl-4-(3-carboxy phenylazo) benzene was coupled to gamma acid by the method of Example 1. Results of testing are given in Example 6.

**EXAMPLE 4**

The dye of structural formula:

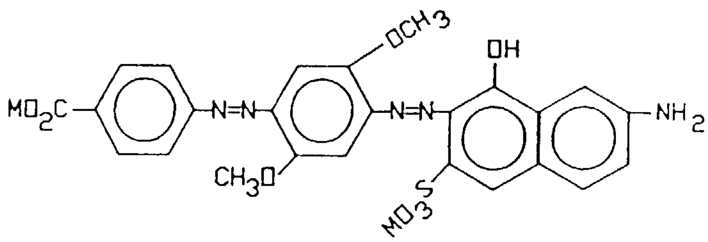

p-Aminobenzoic acid (6.92g, 0.05mole) was diazotized conventionally at 0-5°C in aqueous solution.

2,5-dimethoxy aniline (7.8g, 0.05mole) was dissolved in 80ml of water and 38% HCl (20ml). The solution was cooled to < 5°C and the diazo added. The pH was raised to 4.0 and maintained with 2N NaOH with stirring for 16 hours. The pH was then raised to 10. 2N $NaNO_2$ (28ml) was added. 38% HCl (28ml) was added rapidly and the solution stirred at room temperature for 4 hours. The crystalline diazo was filtered.

Gamma acid (13.6g, 0.05mole) was dissolved in 80ml of water at pH 9.0 using $Na_2CO_3$. The diazo paste was added and the coupling was stirred for 3 hours. The dye was then precipitated by adjusting the pH to 5.0 with acetic acid. The precipitate was filtered and washed with 5% acetic acid, giving the free acid form of the dye. This was formulated as an ink and tested as described in Example 6 with excellent results.

**EXAMPLE 5**

The dye of structural formula:

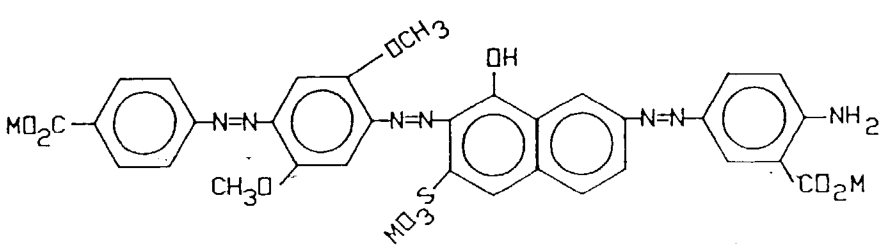

The dye from Example 4 was dissolved in 600ml of water and the pH adjusted to 9.0 with 2N NaOH. 2N $NaNO_2$ (28ml) was added and the solution cooled to < 5°C. 38% HCl (28ml) was added and the solution stirred for 3 hours with the temperature maintained at less than 10°C. Excess nitrous acid was removed with sulfamic acid. Anthranilic acid (7g, 0.05mole) was dissolved in 80ml of water and 15 ml of 38% HCl. The anthranilic acid solution was added to the diazo slurry and the mixture was stirred for 15 minutes. The diazo/anthranilic acid mixture was added to 240ml of chilled 20% $Na_2CO_3$ solution and stirred overnight at pH approximately 7. The pH of the solution was lowered to 5.6 with acetic acid and the dye precipitated. The precipitate was filtered and washed with 5% acetic acid giving the free acid form of the dye. The dye was formulated as in ink and tested as described in Example 6 with excellent results.

**EXAMPLE 6** **PRINTING TESTS**

A table of the waterfastness and non-clogging of the printhead nozzles with inks prepared using the dyes of Examples 1-5 is given below. Nozzles of a conventional drop on demand ink jet printer are left uncapped for six hours and then operated to determine clogging.

Table A

| Dye | % Waterfastness | % of Nozzles Recovered after uncapped aging |
|---|---|---|
| Dye Example 1 | 92 | 94 |
| 2 | 90 | 100 |
| 3 | 97 | 100 |
| 4 | 87 | 100 |
| 5 | 100 | 28 |

Example 4 was chosen as the best mode because of health and safety concerns with regard to the use of cresidine to make Examples 2 and 3.

Waterfastness is measured by controlled soaking in water of paper printed with the ink. The percent waterfastness is the percent of optical density retained after a five minute soak in deionized water, observed, for example, by an optical densitometer.

All of the dyes of the foregoing examples are intense black dyes soluble in water at basic pH. They maintain color fidelity even on basic paper. Because of their intensity, ink formulas having about 2 percent by weight of dye, function well for ink jet printing with excellent waterfastness. The waterfastness achieved is a function of the paper or other substrate and of ordinary water being at neutral or acidic pH. Thus, the dye is insoluble at the pH of the test water applied to the printing and it remains in place as printing.

## Claims

1. A dye of the structural formula:

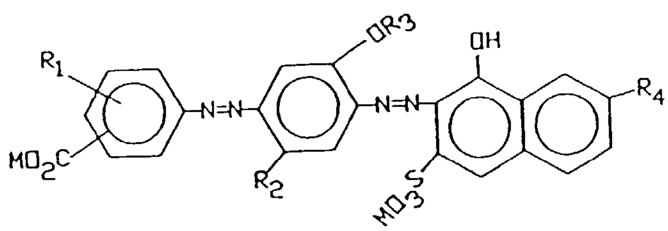

where

$R_1$ is -H, $-CO_2M$, $-CH_3$, $-OR_3$ or Cl;
$R_2$ is $C_{1-4}$ alkyl, $C_{1-4}$ alkoxy or $-CH_2CO_2M$;
$R_3$ is $C_{1-4}$ alkyl;
$R_4$ is $-NH_2$, $-NHR_3$, $-NHCH_2CO_2H$, or

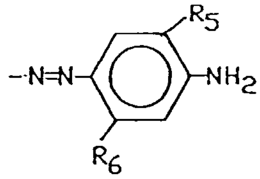

where

$R_5$ is $C_{2-4}$ alkyl or $-CO_2M$ and $R_6$ is -H or $-NH_2$;
and M is H, $NH_4$, Na, K or Li,
and wherein the total number of $-CO_2M$ groups is 1 to 3.

**2.** The dye of claim 1 of the structural formula:

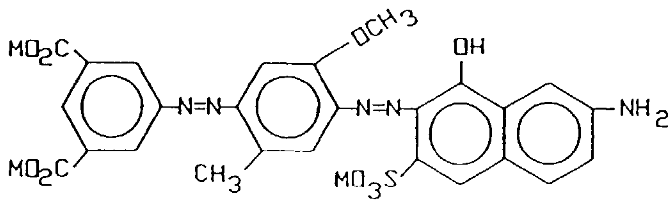

**3.** The dye of claim 1 of structural formula:

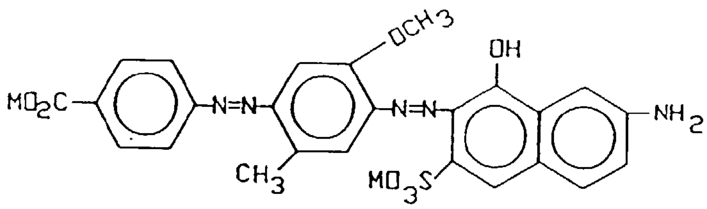

**4.** The dye of claim 1 of structural formula:

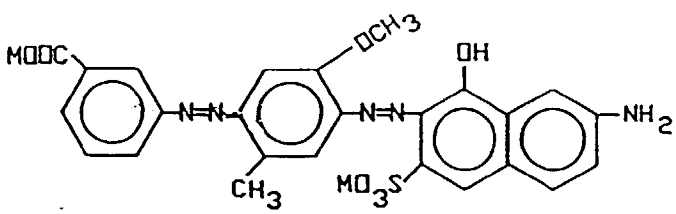

**5.** The dye of claim 1 of structural formula:

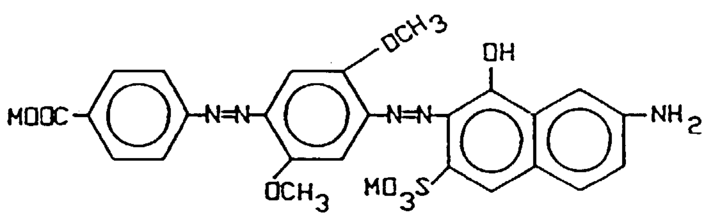

**6.** The dye of claim 1 of structural formula:

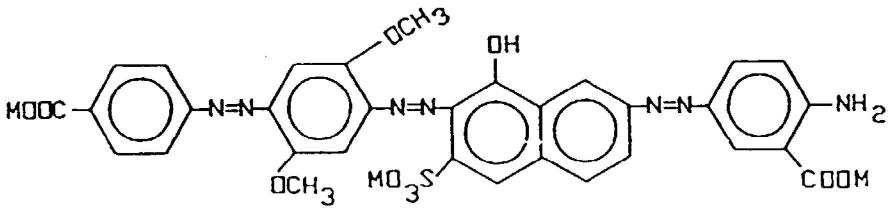

7. A dye according to any preceding claim in which M is $NH_4$.

8. A waterfast ink comprising a dye of any of claims 1 to 6 dissolved in a polar vehicle as the ammonium salt.

9. A waterfast ink comprising by weight:

(a) at least 1% of a dye according to any of claims 1 to 7,
(b) at least 2% of a cosolvent, and
(c) water and ammonium ion bringing said ink to an alkaline pH sufficient to dissolve said dye in said ink.

10. An ink according to claim 8 or claim 9 in which the dye has one of the following formulae:

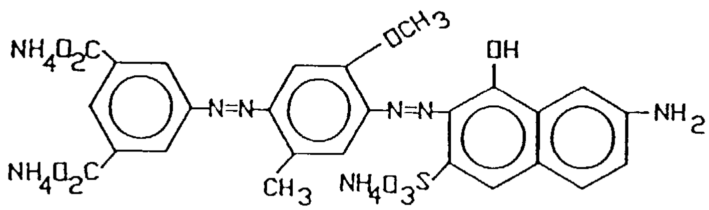

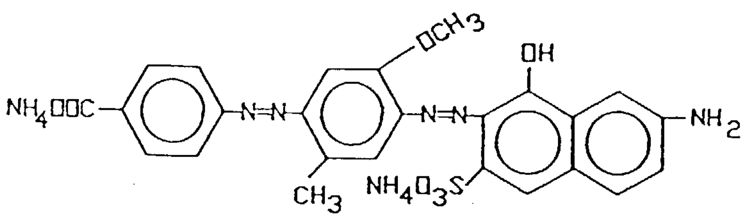

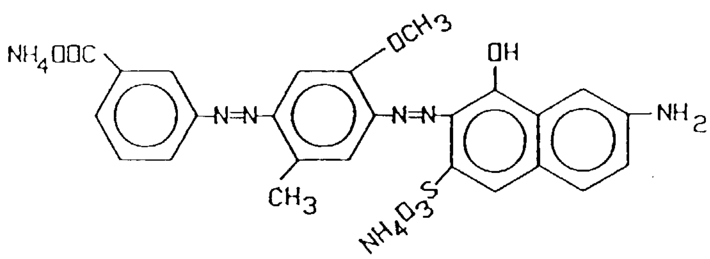

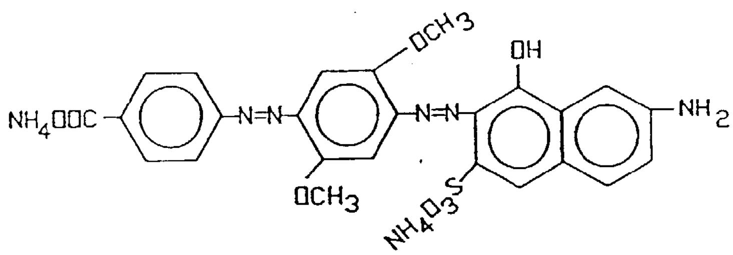

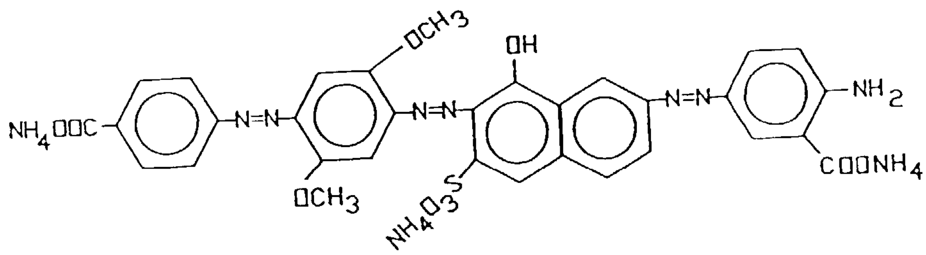

**11.** An ink according to claim 8 or claim 9 in which the dye is the compound as defined in claim 5 in which M is $NH_4$.

**12.** An ink according to any of claims 8 to 11 which includes 2-pyrrolidone as a cosolvent.

**13.** An ink according to any of claims 8 to 12 in which said dye is about 2% by weight of said ink.

**14.** An ink according to any of claims 8 to 13 having a pH of about 8.6.

**15.** An ink according to any of claims 8 to 14 which contains about 5% by weight of 2-pyrrolidone.

**Patentansprüche**

**1.** Farbstoff der folgenden Strukturformel:

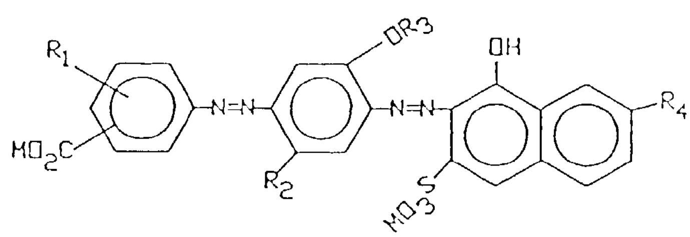

worin

$R_1$ für -H, $-CO_2M$, $-CH_3$, $-OR_3$ oder Cl steht,
$R_2$ für $C_{1-4}$-Alkyl, $C_{1-4}$-Alkoxy oder $-CH_2CO_2M$ steht;
$R_3$ für $C_{1-4}$-Alkyl steht;
$R_4$ für $-NH_2$, $-NHR_3$, $-NHCH_2CO_2H$ oder

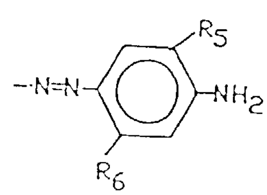

steht, worin $R_5$ für $C_{2-4}$-Alkyl oder $-CO_2M$ steht und $R_6$ -H oder $-NH_2$ bedeutet; und M H, $NH_4$, Na, K oder Li bedeutet, und worin die Gesamtzahl der $-CO_2M$-Gruppen 1 bis 3 beträgt.

**2.** Farbstoff nach Anspruch 1 mit der folgenden Strukturformel:

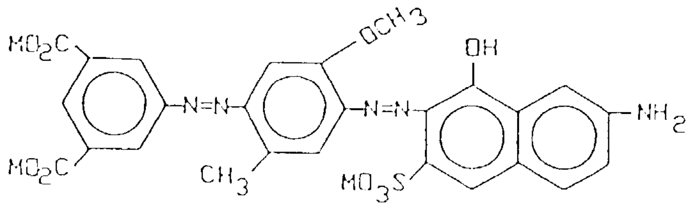

**3.** Farbstoff nach Anspruch 1 mit der folgenden Strukturformel:

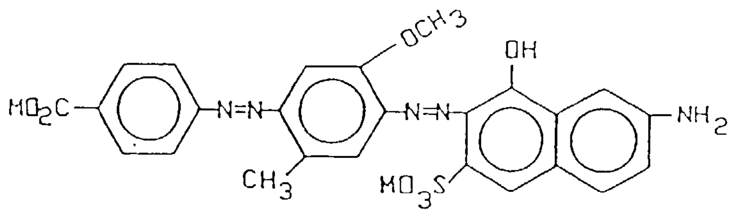

**4.** Farbstoff nach Anspruch 1 mit der folgenden Strukturformel:

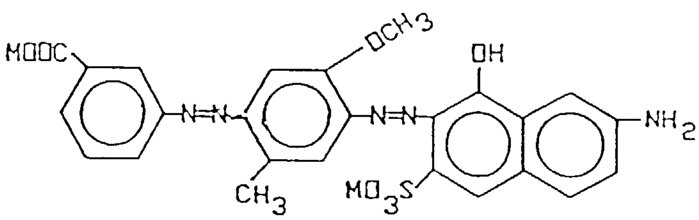

**5.** Farbstoff nach Anspruch 1 mit der folgenden Strukturformel:

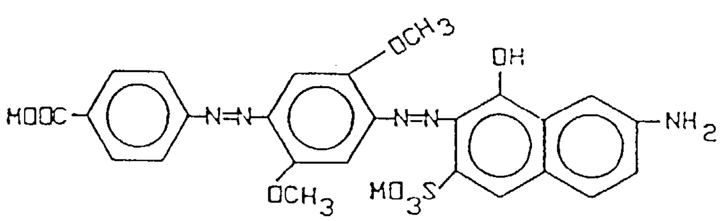

**6.** Farbstoff nach Anspruch 1 mit der folgenden Strukturformel:

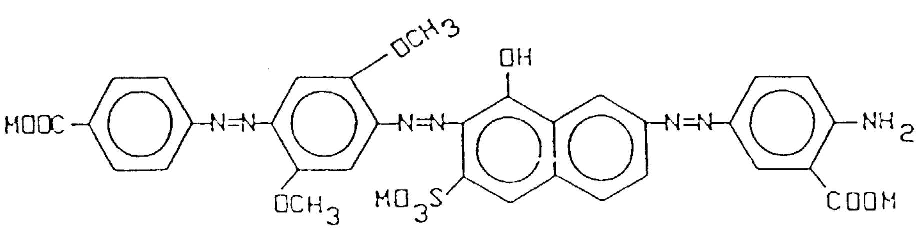

7. Farbstoff nach irgendeinem vorhergehenden Anspruch, bei dem M für $NH_4$ steht.

8. Wasserfeste Tinte, die einen Farbstoff nach irgendeinem der Ansprüche 1 bis 6, aufgelöst in einem polaren Träger in Form des Ammoniumsalzes, umfaßt.

9. Wasserfeste Tinte, die bezogen auf das Gewicht, folgendes umfaßt:

(a) wenigstens 1 % eines Farbstoffes nach irgendeinem der Ansprüche 1 bis 7,
(b) wenigstens 2 % eines Co-Lösungsmittels,
(c) Wasser und Ammoniumion, die die Tinte auf einen alkalischen pH-Wert bringen, der ausreicht, um den Farbstoff in der Tinte aufzulösen.

10. Tinte nach Anspruch 8 oder Anspruch 9, in der der Farbstoff eine der folgenden Formeln aufweist:

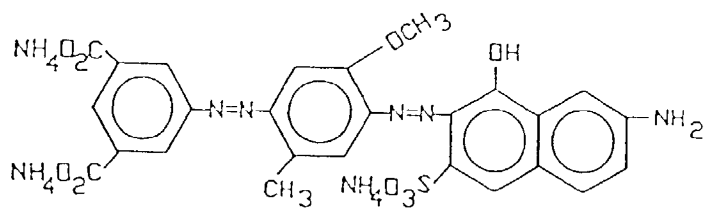

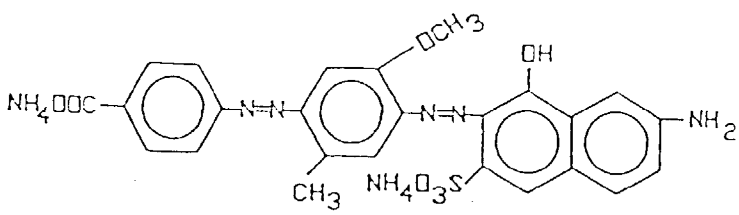

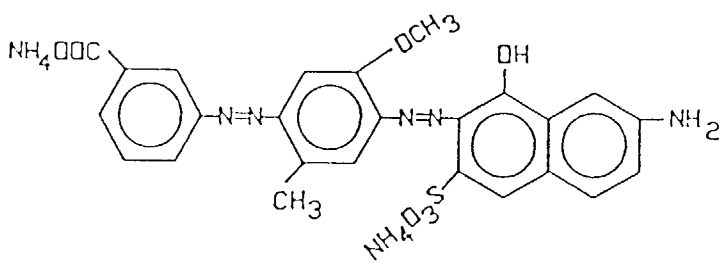

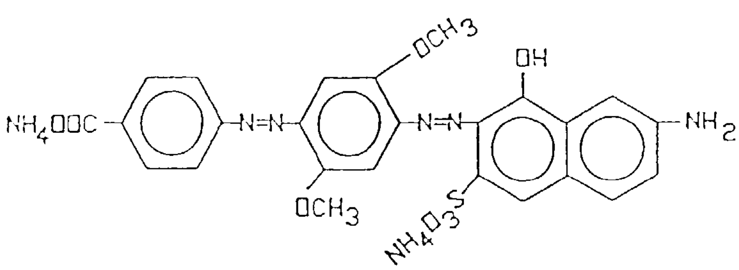

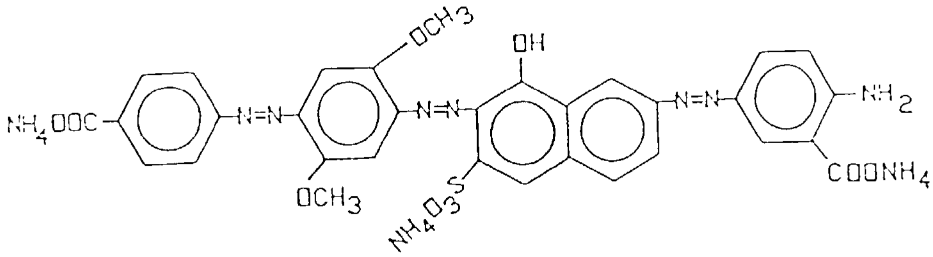

**11.** Tinte nach Anspruch 8 oder Anspruch 9, in der der Farbstoff die Verbindung nach Anspruch 5 ist, bei der M für $NH_4$ steht.

**12.** Tinte nach irgendeinem der Ansprüche 8 bis 11, die als Co-Lösungsmittel 2-Pyrrolinon umfaßt.

**13.** Tinte nach irgendeinem der Ansprüche 8 bis 12, in der der Farbstoff etwa 2 Gew.-% der Tinte ausmacht.

**14.** Tinte nach irgendeinem der Ansprüche 8 bis 13, die einen pH von etwa 8,6 besitzt.

**15.** Tinte nach irgendeinem der Ansprüche 8 bis 14, die etwa 5 Gew.-% 2-Pyrrolidon enthält.

**Revendications**

**1.** Colorant représenté par la formule structurale :

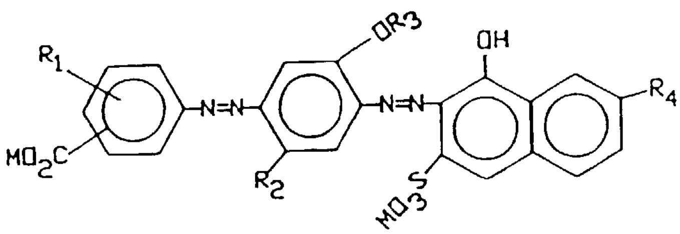

dans laquelle :

$R_1$ est -H, $-CO_2M$, $-CH_3$, $-OR_3$ ou Cl ;
$R_2$ est un groupe alkyle en $C_{1-4}$, un groupe alcoxy en $C_{1-4}$ ou un groupe $-CH_2CO_2M$ ;
$R_3$ est un groupe alkyle en $C_{1-4}$ ;
$R_4$ est $-NH_2$, $-NHR_3$, $-NHCH_2CO_2H$ ou

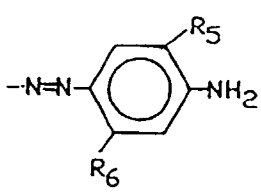

où $R_5$ est un groupe alkyle en $C_{2-4}$ ou un groupe $-CO_2M$ et $R_6$ est -H ou $-NH_2$ ;
et M est H, $NH_4$, Na, K ou Li,
et dans laquelle le nombre total de groupes $-CO_2M$ est de 1 à 3.

**2.** Colorant suivant la revendication 1, représenté par la formule structurale :

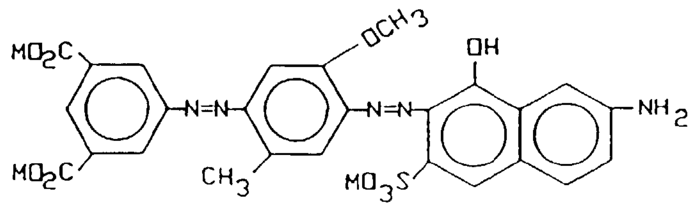

**3.** Colorant suivant la revendication 1, représenté par la formule structurale :

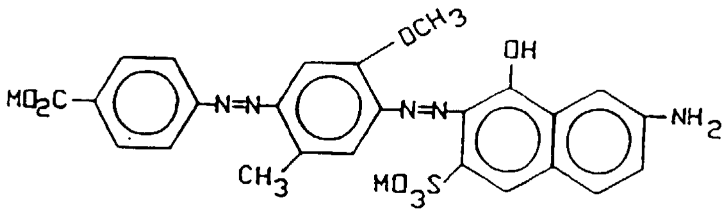

**4.** Colorant suivant la revendication 1, représenté par la formule structurale :

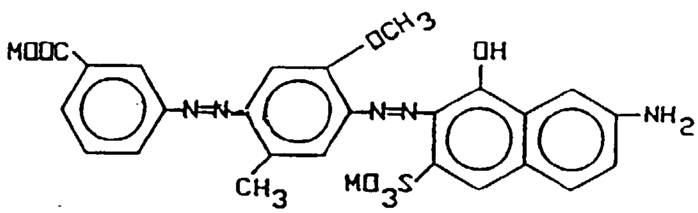

**5.** Colorant suivant la revendication 1, représenté par la formule structurale :

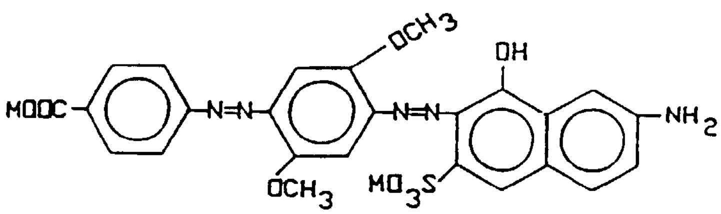

**6.** Colorant suivant la revendication 1, représenté par la formule structurale :

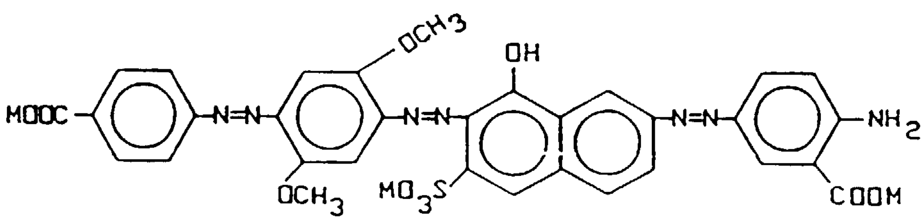

**7.** Colorant suivant l'une quelconque des revendications précédentes, dans lequel M est $NH_4$.

**8.** Encre résistante à l'eau comprenant un colorant suivant l'une quelconque des revendications 1 à 6, dissout dans un véhicule polaire sous forme du sel d'ammonium.

**9.** Encre résistante à l'eau comprenant en poids :

(a) au moins 1% d'un colorant suivant l'une quelconque des revendications 1 à 7,
(b) au moins 2% d'un co-solvant, et
(c) de l'eau et de l'ion ammonium amenant cette encre à un pH alcalin suffisant pour dissoudre ce colorant dans cette encre.

**10.** Encre suivant la revendication 8 ou la revendication 9, dans laquelle le colorant représente l'une des formules suivantes :

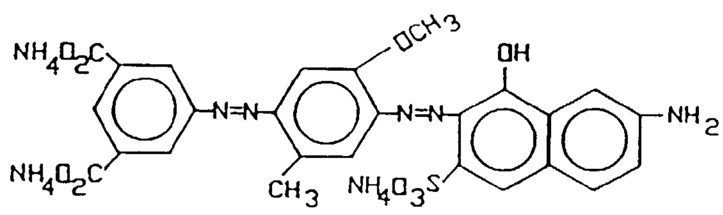

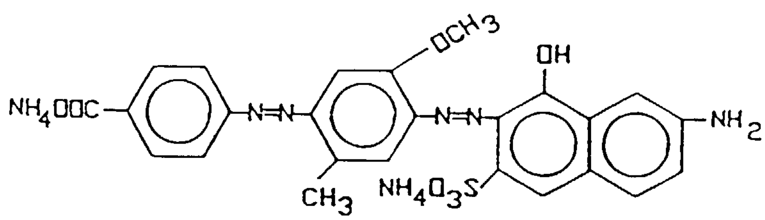

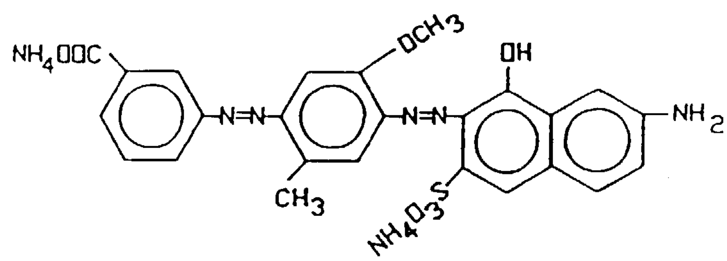

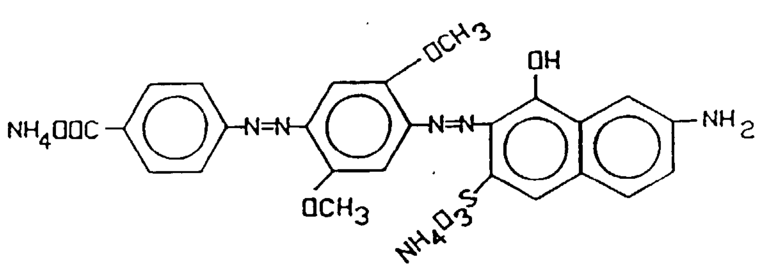

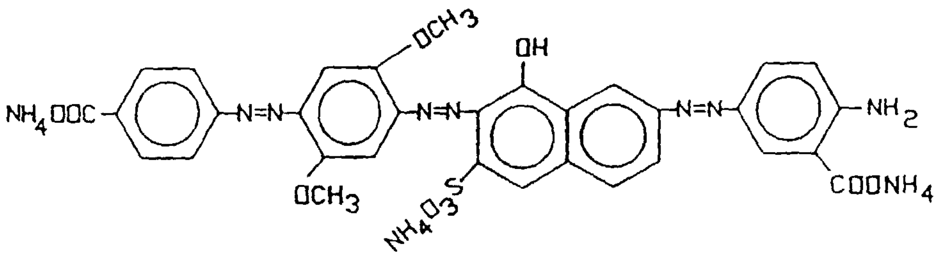

**11.** Encre suivant la revendication 8 ou la revendication 9, dans laquelle le colorant est le composé tel que défini dans la revendication 5, dans laquelle M est $NH_4$.

**12.** Encre suivant l'une quelconque des revendications 8 à 11, qui comprend de la 2-pyrrolidone comme co-solvant.

**13.** Encre suivant l'une quelconque des revendications 8 à 12, dans laquelle ce colorant représente environ 2% en poids de cette encre.

**14.** Encre suivant l'une quelconque des revendications 8 à 13, ayant un pH d'environ 8,6.

**15.** Encre suivant l'une quelconque des revendications 8 à 14, qui contient environ 5% en poids de 2-pyrrolidone.